# EUROPEAN PATENT APPLICATION

(11) **EP 4 531 128 A1**
(43) Date of publication of application: **02.04.2025**
(21) Application number: 23811596.8
(22) Date of filing: 09.05.2023
(51) Int. Cl.: H01M 4/13

(54) **LITHIUM-ION SECONDARY BATTERY ELECTRODE AND LITHIUM-ION SECONDARY BATTERY**

(30) Priority: 23.05.2022 JP 2022084116
(71) Applicant: KABUSHIKI KAISHA TOYOTA JIDOSHOKKI, Kariya-shi, Aichi 448-8671 (JP)
(72) Inventor: KONDO, Yushi, Kariya-shi, Aichi 448-8671 (JP); TANAKA, Toshimitsu, Kariya-shi, Aichi 448-8671 (JP)
(74) Representative: TBK
(86) International application number: PCT/JP2023/017412
(87) International publication number: WO 2023/228721

(57) **Abstract**

An electrode includes a current collector and a cathode active material layer (102) formed on a surface of the current collector. The area of the cathode active material layer (102) is greater than or equal to 1 m². The cathode active material layer (102) includes a main surface located on a side opposite to a surface facing the current collector, and a groove (103) that opens in the main surface. In plan view of the main surface, a maximum distance D, which is the maximum value of a specific distance, is less than or equal to 60 mm. A part of the main surface in which the groove (103) is not provided is referred to as an island (104). The specific distance is the shorter one of the distance between an arbitrary point in the island (104) and an outer peripheral edge of the cathode active material layer (102), and the distance between the arbitrary point and the groove (103).

## Description

### TECHNICAL FIELD

The present invention relates to an electrode for a lithium-ion rechargeable battery and a lithium-ion rechargeable battery.

### BACKGROUND ART

Patent Literature 1 discloses a bipolar power storage device formed by stacking individually produced power storage cells in series. Each power storage cell includes a cathode, an anode, and a separator. The cathode includes a cathode active material layer formed on one surface of a foil-shaped cathode current collector. The anode includes an anode active material layer formed on one surface of a foil-shaped anode current collector. The anode is disposed so that the anode active material layer faces the cathode active material layer of the cathode. The separator is disposed between the cathode and the anode.

In the above-described power storage device, the power storage cells are electrically connected in series by being stacked such that each cathode current collector and the corresponding anode current collector are in contact with each other. In this case, current flows in the stacking direction of the power storage cells. Therefore, the above-described power storage device has a relatively large area of the conductive path and thus has a higher output than a power storage device having a structure in which power storage cells are electrically connected in series through tabs protruding from the power storage cells.

### CITATION LIST

### Patent Literature

Patent Literature 1: Japanese Laid-Open Patent Publication No. 2017-16825

### SUMMARY OF INVENTION

### Technical Problem

In order to increase the capacity of a power storage cell, the amount of active material retained in the electrode active material layer may be increased by increasing the size of the electrode active material layer.

In the case of a power storage device having a structure in which current flows in the stacking direction of the power storage cells as in the above-described power storage device, an increase in the size of each electrode active material layer by increasing the thickness of the electrode active material layer undesirably increases the electrical resistance. Furthermore, depending on the application of the above-described power storage device, an increase in the height of the power storage device caused by increasing the thickness of each electrode active material layer should be avoided. For example, in the case of a power storage device used as a battery disposed under the floor of the passenger compartment of a vehicle such as a battery electric vehicle or a hybrid electric vehicle, the power storage device is preferably as thin and flat as possible. The height of the battery disposed under the floor of the passenger compartment is at most approximately 20 cm.

In view of the above factors, the present inventors considered increasing the capacity of a lithium-ion rechargeable battery, in which current flows in the stacking direction of the power storage cells, by enlarging the area, that is, the planar size, of each electrode active material layer. The required capacity for a lithium-ion rechargeable battery used in a battery electric vehicle is approximately 50 kWh to 100 kWh.

Even if the constituents and the density of the electrode active material layers are taken into consideration, it is necessary to make the area of each electrode active material layer greater than or equal to 1 m² in order to obtain a capacity greater than or equal to 50 kWh while making the height of the lithium-ion rechargeable battery less than or equal to 20 cm. When a lithium-ion rechargeable battery in which the area of each electrode active material layer was greater than or equal to 1 m² was produced and the properties thereof were evaluated, the electrical resistance of the electrodes increased undesirably. Since this increase in electrical resistance would not occur in a lithium-ion rechargeable battery having a conventional planar size, such an increase in electrical resistance is considered to be a phenomenon unique to the case in which the area of each electrode active material layer is increased to reach or exceed a certain size. Solution to Problem

An electrode for a bipolar lithium-ion rechargeable battery includes a current collector and a cathode active material layer formed on a surface of the current collector. An area of the cathode active material layer is greater than or equal to 1 m². The cathode active material layer includes a main surface located on a side opposite to a surface facing the current collector, and a groove that opens in the main surface. A part of the main surface in which the groove is not provided is referred to as an island. In plan view of the main surface, a shorter one of a distance between an arbitrary point in the island and an outer peripheral edge of the cathode active material layer, and a distance between the arbitrary point and the groove is defined as a specific distance. A maximum value of the specific distance is less than or equal to 60 mm.

In the above-described electrode for the lithium-ion rechargeable battery, the cathode active material layer preferably has a shape with a longitudinal direction and a transverse direction, and the groove preferably has a linear shape extending in the longitudinal direction of the cathode active material layer.

In the above-described electrode for the lithium-ion rechargeable battery, the cathode active material layer has a rectangular shape with a longitudinal direction and a transverse direction. The groove has a linear shape extending in the longitudinal direction of the cathode active material layer. An aspect ratio of the island is greater than or equal to 12.

In the above-described electrode for the lithium-ion rechargeable battery, the cathode active material layer has a thickness greater than or equal to 250 µm.

A bipolar lithium-ion rechargeable battery includes the above-described electrode.

The above-described lithium-ion rechargeable battery has a capacity greater than or equal to 50 kWh.

### Advantageous Effects of Invention

According to the present invention, it is possible to limit the increase in electrical resistance caused by an increase in the area of the active material layer in each electrode for a bipolar lithium-ion rechargeable battery.

### BRIEF DESCRIPTION OF DRAWINGS

- Fig. 1: is a cross-sectional view of an electrode for a power storage device.
- Fig. 2: is a plan view of the electrode for the power storage device.
- Fig. 3: is a cross-sectional view taken along line 3-3 in Fig. 2.
- Fig. 4: is an enlarged view of part A in Fig. 2.
- Fig. 5: is a cross-sectional view of the power storage device.
- Fig. 6: is a cross-sectional view of a bipolar electrode according to a modification.

### DESCRIPTION OF EMBODIMENTS

An embodiment of the present invention will now be described with reference to the drawings.

### Electrode

An electrode according to the present embodiment is used as a cathode or an anode of a bipolar power storage device in which multiple power storage cells are stacked in series. The power storage device is a lithium-ion rechargeable battery.

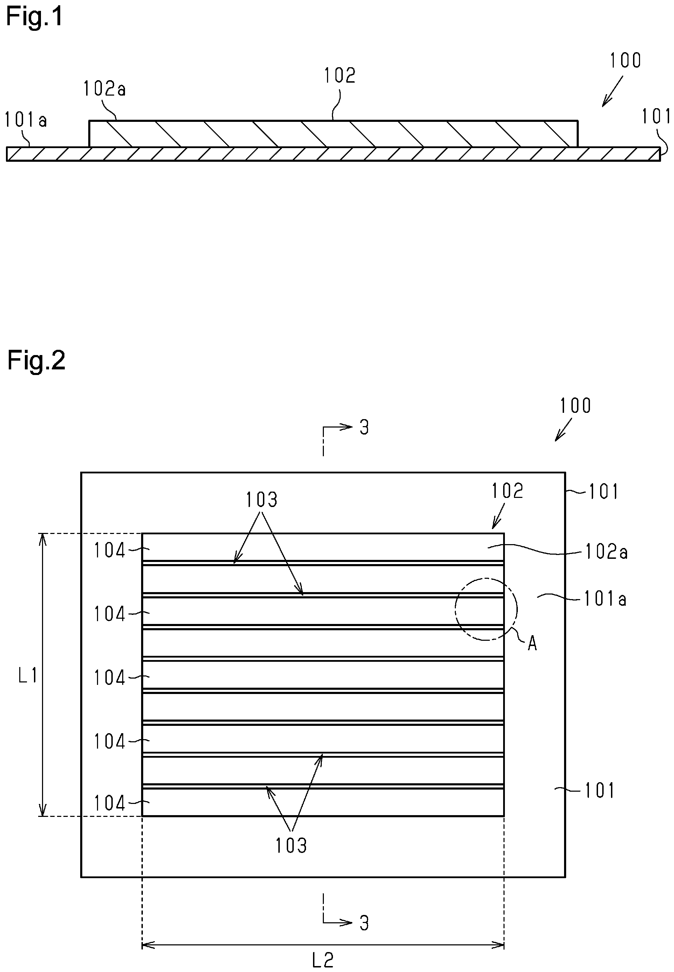

Fig. 1 shows an electrode 100 that is used in a lithium-ion rechargeable battery and includes a current collector 101 and an active material layer 102 provided on a first surface 101a of the current collector 101.

### Current Collector

The current collector 101 is a chemically inert electric conductor for allowing current to continuously flow through the active material layer 102 during discharging or charging of the lithium-ion rechargeable battery. The current collector 101, for example, has the shape of a foil. The thickness of the foil-shaped current collector 101 is, for example, in a range of 1 µm to 100 µm; preferably in a range of 10 µm to 60 µm. The current collectors 101 may be made of, for example, a metal material, a conductive resin material, or a conductive inorganic material.

Examples of the metal material include copper, aluminum, nickel, titanium, and stainless steels. Examples of the conductive resin material include a resin obtained by adding a conductive filler to a conductive polymer material or a non-conductive polymer material as necessary.

In the case in which the electrode 100 is used as a cathode of a power storage device, the current collector 101 is preferably an aluminum current collector made of aluminum. The aluminum current collector may be made of aluminum alone or may be made of an aluminum alloy. Examples of the aluminum alloy include an Al-Mn alloy, an Al-Mg alloy, and an Al-Mg-Si alloy. The content ratio of aluminum in the aluminum layer is, for example, greater than or equal to 50 mass%, and preferably greater than or equal to 70 mass%.

The current collector 101 may include multiple layers including one or more layers containing the above-described metal material or conductive resin material. The surface of the current collector 101 may be covered with a known protective layer such as a carbon coat layer. The surface of the current collector 101 may be treated by a known method such as plating.

### Active Material Layer

The active material layer 102 is formed on the first surface 101a of the current collector 101.

The active material layer 102 contains an active material capable of occluding and releasing lithium ions.

In the case in which the electrode 100 is used as a cathode of a power storage device, the active material contained in the active material layer 102 is a cathode active material. The cathode active material may be a material that can be used as a cathode active material of a lithium-ion rechargeable battery, such as a lithium composite metal oxide having a layered rock-salt structure, a metal oxide having a spinel structure, or a polyanion-based compound. Two or more kinds of cathode active materials may be used in combination. Specific examples of the cathode active material include olivine-type lithium iron phosphate (LiFePO₄), which is a polyanionic compound.

In the case in which the electrode 100 is used as an anode of a power storage device, the active material contained in the active material layer 102 is an anode active material. The anode active material may be a material that can be used as an anode active material of a lithium-ion rechargeable battery, such as Li, carbon, a metal compound, or an element or a compound thereof that can be alloyed with lithium. Examples of the carbon include natural graphite, artificial graphite, hard carbon (non-graphitizable carbon), and soft carbon (graphitizable carbon). Examples of the artificial graphite include highly oriented graphite and mesocarbon microbeads. Examples of elements that can be alloyed with lithium include silicon and tin.

The content of the active material in the active material layer 102 is not particularly limited. The content of the active material in the active material layer 102 is, for example, greater than or equal to 96 mass% and less than 100 mass%.

The active material layer 102 may further contain a conductive additive for increasing electric conductivity, a binder, electrolytes (polymer matrices, ion-conductive polymers, liquid electrolytes, and the like), electrolyte-supporting salts (lithium salts) for increasing ionic conductance, and the like as necessary. The components contained in the active material layer and the compound ratio of the components, and the thickness of the active material layer are not particularly limited, and conventional knowledge regarding lithium-ion rechargeable batteries can be appropriately referenced.

The conductive additive is added to increase the conductivity of the electrode 100. Examples of the conductive additive include acetylene black, carbon black, graphite, and carbon nanotubes (CNT).

Examples of the binder include following: fluorine-containing resin such as polyvinylidene fluoride, polytetrafluoroethylene, and fluorine rubber; thermoplastics resin such as polypropylene and polyethylene; imide resin such as polyimide and polyamideimide; alkoxysilyl group-containing resin; acrylic resin such as polyacrylic acid and polymethacrylic acid; styrene-butadiene rubber; carboxymethyl cellulose; alginates such as sodium alginate and ammonium alginate; water-soluble cellulose ester crosslinked products; and starch-acrylic acid graft polymers. These binders may be used alone or in combination. As the solvent or dispersion medium, for example, water, N-methyl-2-pyrrolidone or the like is used.

### Size and Shape of Active Material Layer

As shown in Fig. 2, the active material layer 102 is formed in a central portion of the first surface 101a of the current collector 101 in plan view as viewed from the stacking direction of the current collector 101 and the active material layer 102 (hereinafter, simply referred to as plan view). A peripheral portion of the first surface 101a of the current collector 101 in plan view is an uncoated portion, on which the active material layer 102 is not provided. The uncoated portion is disposed to surround the active material layer 102 in plan view.

The thickness, density, weight per unit area, and porosity of the active material layer 102 are not particularly limited, and conventional knowledge about lithium-ion rechargeable batteries can be referred to as appropriate. The following provides specific examples of the thickness, density, weight per unit area, and porosity of the active material layer 102 when it is a cathode active material layer and when it is an anode active material layer.

### Thickness, Density, Weight Per Unit Area, and Porosity in Case of Cathode Active Material Layer

The thickness of the active material layer 102 is, for example, greater than or equal to 250 µm, and preferably greater than or equal to 300 µm. The thickness of the active material layer 102 is, for example, less than or equal to 600 µm, and preferably less than or equal to 500 µm. The capacity of the power storage cell is increased by increasing the thickness of the active material layer 102.

The density of the active material layer 102 is, for example, greater than or equal to 1.6 g/cm³, and preferably greater than or equal to 1.8 g/cm³. The density of the active material layer 102 is, for example, less than or equal to 2.5 g/cm³, and preferably less than or equal to 2.3 g/cm³. The capacity of the power storage cell is increased by increasing the density of the active material layer 102.

The weight per unit area of the active material layer 102 is, for example, greater than or equal to 50 mg/cm², preferably greater than or equal to 60 mg/cm², and more preferably greater than or equal to 70 mg/cm². The weight per unit area of the active material layer 102 is, for example, less than or equal to 90 mg/cm², and preferably less than or equal to 80 mg/cm². The capacity of the power storage cell is increased by increasing the weight per unit area of the active material layer 102.

The porosity of the active material layer 102 is, for example, greater than or equal to 30%, and preferably greater than or equal to 35%. The porosity of the active material layer 102 is, for example, less than or equal to 55%, and preferably less than or equal to 45%.

### Thickness, Density, Weight Per Unit Area, and Porosity in Case of Anode Active Material Layer

The thickness of the active material layer 102 is, for example, greater than or equal to 200 µm, and preferably greater than or equal to 250 µm. The thickness of the active material layer 102 is, for example, less than or equal to 600 µm, and preferably less than or equal to 500 µm. The capacity of the power storage cell is increased by increasing the thickness of the active material layer 102.

The density of the active material layer 102 is, for example, greater than or equal to 1.1 g/cm³, and preferably greater than or equal to 1.2 g/cm³. The density of the active material layer 102 is, for example, less than or equal to 1.7 g/cm³, and preferably less than or equal to 1.5 g/cm³. The capacity of the power storage cell is increased by increasing the density of the active material layer 102.

The weight per unit area of the active material layer 102 is, for example, greater than or equal to 30 mg/cm², preferably greater than or equal to 33 mg/cm², and more preferably greater than or equal to 35 mg/cm². The weight per unit area of the active material layer 102 is, for example, less than or equal to 50 mg/cm², and preferably less than or equal to 45 mg/cm². The capacity of the power storage cell is increased by increasing the weight per unit area of the active material layer 102.

The porosity of the active material layer 102 is, for example, greater than or equal to 30%, and preferably greater than or equal to 35%. The porosity of the active material layer 102 is, for example, less than or equal to 55%, and preferably less than or equal to 45%.

The area of the active material layer 102, specifically the area of the range in the first surface 101a of the current collector 101 in which the active material layer 102 is formed, is greater than or equal to 1 m². The area of the active material layer 102 is preferably greater than or equal to 1.2 m², and more preferably greater than or equal to 1.4 m². The area of the active material layer 102 is, for example, less than or equal to 3 m². In this specification, the area of the active material layer 102 is an area including grooves 103, which will be discussed below.

The shape of the active material layer 102 in plan view is not particularly limited. The shape of the active material layer 102 in plan view is, for example, a polygonal shape, a circular shape, or an elliptical shape. In a case in which the active material layer 102 has a rectangular shape, the aspect ratio of the active material layer 102 in plan view is, for example, in a range of 1 to 2.5, and preferably in a range of 1 to 2. The vertical dimension L1 of the active material layer 102 is, for example, in a range of 500 mm to 1500 mm, and the horizontal dimension L2 is, for example, in a range of 800 mm to 3000 mm. The shape of the active material layer 102 described above in plan view and the numerical values of the aspect ratio, the vertical dimension L1, and the horizontal dimension L2 of the active material layer 102 can be applied to the case in which the active material layer 102 is either a cathode active material layer or an anode active material layer.

### Grooves of Active Material Layer

In the case in which the electrode 100 is used as a cathode of a power storage device, the active material layer 102 includes grooves 103. The grooves 103 will now be described with reference to an example in which the active material layer 102 has a horizontally elongated rectangular shape in plan view. The active material layer 102 will now be referred to as a cathode active material layer 102.

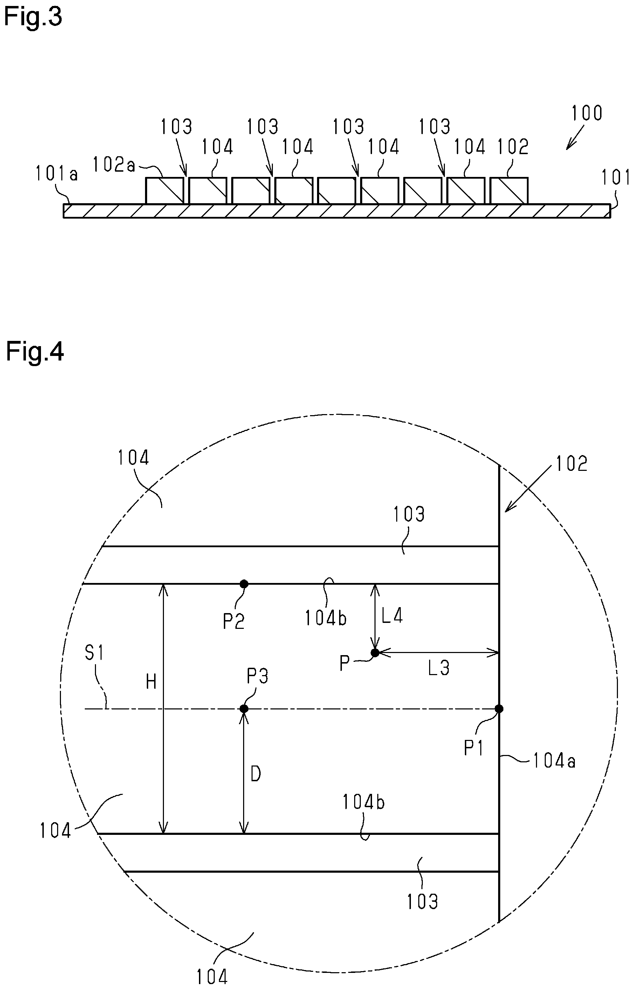

As shown in Figs. 2 and 3, the cathode active material layer 102 includes grooves 103 that have a rectangular cross section and open in a main surface 102a. The main surface 102a is a surface of the cathode active material layers 102 on a side opposite to the surface facing the current collector 101.

In plan view, the grooves 103 extend in the horizontal direction, which is the longitudinal direction of the cathode active material layer 102. The grooves 103 each have a constant width from one end to the other end in the horizontal direction, and are formed to have a linear shape. The cathode active material layer 102 includes multiple grooves 103, which are formed parallel to each other in the vertical direction with a consistent pitch. The bottom surface of each groove 103 is formed by the current collector 101. The grooves 103 are slit-shaped. The cross-sectional shape of each groove 103 is rectangular.

In plan view, parts of the main surface 102a of the cathode active material layer 102 in which the grooves 103 are not formed are referred to as islands 104 of the cathode active material layer 102. As described above, the grooves 103 each have a linear shape extending in the horizontal direction of the cathode active material layer 102, and are arranged in parallel in the vertical direction. Therefore, each island 104 of the cathode active material layer 102 is formed in a horizontally elongated rectangular shape.

As shown in Fig. 4, each island 104 includes outer edges 104a, which are edge portions forming the outer peripheral edge of the cathode active material layer 102, and groove edges 104b, which are edge portions forming the groove 103. In this specification, the outer peripheral edge of the active material layer 102 refers to an outer peripheral edge of the range including the grooves 103 and the islands 104.

Each island 104 is formed in a shape in which the distances from each outer edge 104a and each groove edge 104b meet the condition described below. In other words, the grooves 103 are formed in the cathode active material layer 102 such that each island 104 has a shape meeting the condition described below.

The condition is that, when the shorter one of a distance L3 from the outer edge 104a to an arbitrary point P in each island 104 and a distances L4 from the groove edge 104b to the arbitrary point P is defined as a specific distance, the maximum value of the specific distance is less than or equal to 60 mm. This condition means that the distance from any given point in the island 104 to the closest point on the periphery of the island 104 is less than or equal to 60 mm. Hereinafter, the maximum value of the specific distance is referred to as a maximum distance D. When each island 104 has a horizontally elongated rectangular shape, the point at which the specific distance is the maximum distance D in the island 104 is a point on a straight line S1 that extends in the horizontal direction and divides the island 104 into two equal parts. At that point, the distance L3 to the outer edge 104a, is longer than the distance L4 to the groove edge 104b. In this case, the maximum distance D is half the width H of the island 104.

The maximum distance D is less than or equal to 60 mm, preferably less than or equal to 40 mm, and more preferably less than or equal to 20 mm. By shortening the maximum distance D, the effect of limiting the increase in electrical resistance is improved.

The widths H of each island 104, which is the dimension in the transverse direction, is, for example, less than or equal to 120 mm, preferably less than or equal to 80 mm, and more preferably less than or equal to 40 mm.

The aspect ratio of the island 104 is, for example, greater than or equal to12, preferably greater than or equal to 15, and more preferably greater than or equal to 17. The aspect ratio of the island 104 is, for example, less than or equal to 40.

The ratio of the total area of the islands 104 to the area of the cathode active material layer 102 is, for example, in a range of 90% to 99%. The capacity of the power storage cell is increased by increasing the ratio.

The width of each groove 103 is, for example, greater than or equal to 0.5 mm. When the width of each groove 103 is greater than or equal to 0.5 mm, a significant effect in limiting the increase in electrical resistance is achieved. Increasing the width of each groove 103 facilitates the formation of the cathode active material layer 102 having the grooves 103, and shortens the time for the electrolyte to be added through the grooves 103. The width of each groove 103 is, for example, greater than or equal to 3 mm. This configuration improves the electrolyte retention functionality, in addition to the above-described advantages. Specifically, the ability to retain the electrolyte within the grooves 103 is improved. The width of each groove 103 is, for example, less than or equal to 8 mm or less than or equal to 3 mm. Decreasing the width of each groove 103 increases the ratio of the total area of the islands 104 to the area of the cathode active material layer 102. The formation pitch of the grooves 103 is the sum of the width of each groove 103 and the width H of each island 104.

The grooves 103 are formed to reach the current collector 101. Specifically, the bottom of each groove 103 is the first surface 101a of the current collector 101, and the depth of the groove 103 is equal to the thickness of the cathode active material layer 102. When a protective layer such as a carbon coat layer is formed on the first surface 101a of the current collector 101, the protective layer serves as the bottom of each groove 103. Forming the grooves 103 to reach the current collector 101 maximizes the cross-sectional flow area of each groove 103, which is a passage for electrolyte.

The method for forming the grooves 103 is not particularly limited. One example of a method for forming the grooves 103 involves applying a composite to the current collector 101 using a slit coating technique, in which the composite solidifies to form the cathode active material layer 102. Specifically, a die coater equipped with a shim or a similar obstruction that partially blocks the ejection of the composite at the slit die outlet is prepared. Then, by applying the composite using the die coater, the composite material can be applied in a shape having grooves. Alternatively, the grooves 103 may be formed by partially scraping the main surface 102a of the cathode active material layer 102, which has been formed without grooves 103.

### Power Storage Device

Next, an example of a power storage device that uses the electrode 100 is described.

The power storage device that employs the electrode 100 is, for example, a lithium-ion rechargeable battery used as a battery for various vehicles such as a forklift, a hybrid electric vehicle, and a battery electric vehicle.

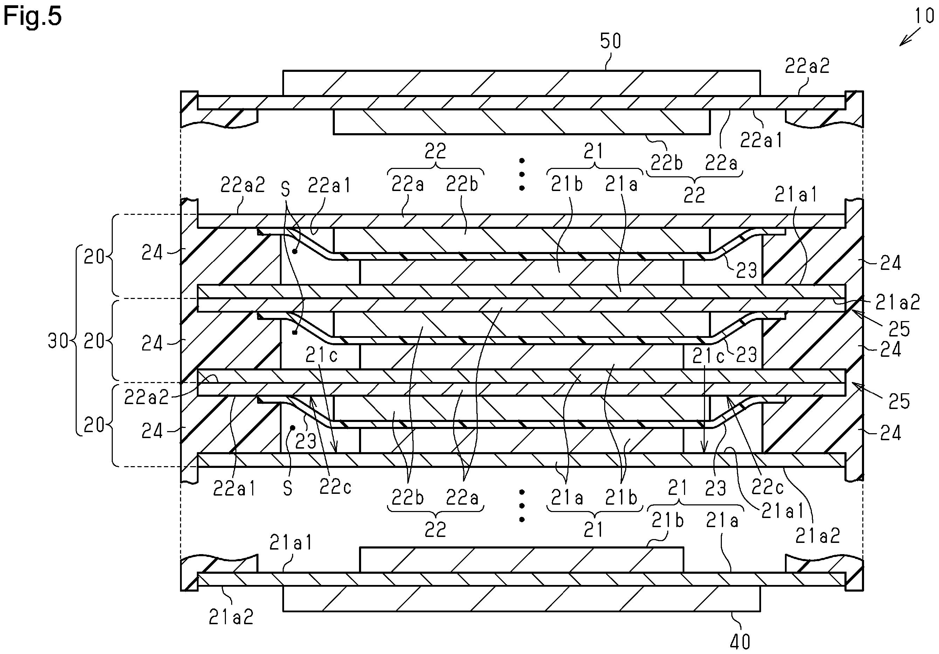

As shown in Fig. 5, a power storage device 10 is configured to include a cell stack 30 (stack body) in which power storage cells 20 are stacked in a stacking direction. Hereinafter, the stacking direction of the power storage cells 20 will be simply referred to as the stacking direction. Each power storage cell 20 includes a cathode 21, an anode 22, a separator 23, and a spacer 24. Both the cathode 21 and the anode 22 in each power storage cell 20 are the above-described electrodes 100. Specifically, the cathode 21 is an electrode 100 that includes the grooves 103, and the anode 22 is an electrode 100 that does not include the grooves 103. In Fig. 5, the grooves 103 are not shown.

The cathode 21 includes a cathode current collector 21a and a cathode active material layer 21b, which is provided on a first surface 21a1 of the cathode current collector 21a. When the cathode 21 is the electrode 100, the cathode current collector 21a is the current collector 101, and the cathode active material layer 21b is the active material layer 102.

In plan view, the cathode active material layer 21b is formed in a central portion of the first surface 21a1 of the cathode current collector 21a. A peripheral portion of the first surface 21a1 of the cathode current collector 21a in plan view is a cathode uncoated portion 21c, on which the cathode active material layer 21b is not provided. The cathode uncoated portion 21c is disposed to surround the cathode active material layer 21b in plan view.

The anode 22 includes an anode current collector 22a and an anode active material layer 22b provided on a first surface 22a1 of the anode current collector 22a. When the anode 22 is the electrode 100, the anode current collector 22a is the current collector 101, and the anode active material layer 22b is the active material layer 102.

In plan view, the anode active material layer 22b is formed in a central portion of the first surface 22a1 of the anode current collector 22a. A peripheral portion of the first surface 22a1 of the anode current collector 22a in plan view is an anode uncoated portion 22c, on which the anode active material layer 22b is not provided. The anode uncoated portion 22c is disposed to surround the cathode active material layer 21b in plan view. The cathode 21 and the anode 22 are disposed such that the cathode active material layer 21b and the anode active material layer 22b face each other in the stacking direction. That is, the direction in which the cathode 21 and the anode 22 face each other agrees with the stacking direction. The anode active material layer 22b is formed to have the same size as the cathode active material layer 21b, or is formed to be slightly larger than the cathode active material layer 21b. When the anode active material layer 22b is formed to be slightly larger than the cathode active material layer 21b, and the entire formation region of the cathode active material layer 21b is located within the formation region of the anode active material layer 22b in plan view.

The cathode current collector 21a includes a second surface 21a2, which is a surface on the side opposite to the first surface 21a1. The cathode 21 is a monopolar electrode, in which neither the cathode active material layer 21b nor the anode active material layer 22b is formed on the second surface 21a2 of the cathode current collector 21a. The anode current collector 22a includes a second surface 22a2, which is a surface on the side opposite to the first surface 22a1. The anode 22 is a monopolar electrode, in which neither the cathode active material layer 21b nor the anode active material layer 22b is formed on the second surface 22a2 of the anode current collector 22a.

The separator 23 is disposed between the cathode 21 and the anode 22 and separates the cathode 21 and the anode 22 from each other to prevent a short circuit due to contact between the cathode 21 and the anode 22, while allowing lithium ions to pass therethrough.

The separator 23 is, for example, a porous sheet or nonwoven fabric containing a polymer that absorbs and retains electrolyte. Examples of materials used for the separator 23 include polyolefins such as polypropylene and polyethylene, as well as polyester. The separator 23 may have a single-layer structure or a multilayer structure. The multilayer structure may include, for example, an adhesive layer, a ceramic layer as a heat-resistant layer, or the like.

The spacer 24 is disposed between the first surface 21a1 of the cathode current collector 21a of the cathode 21 and the first surface 22a1 of the anode current collector 22a of the anode 22, while being on the outer side of the cathode active material layer 21b and the anode active material layer 22b. The spacer 24 is bonded to both the cathode current collector 21a and the anode current collector 22a. The spacer 24 ensures a gap between the cathode current collector 21a and the anode current collector 22a to prevent a short circuit between the current collectors, and provides a liquid tight seal between the current collectors.

In plan view, the spacer 24 is formed to have the shape of a frame that extends along the peripheral portions of the cathode current collector 21a and the anode current collector 22a and surrounds the cathode current collector 21a and the anode current collector 22a. The spacer 24 is disposed between the cathode uncoated portion 21c of the first surface 21a1 of the cathode current collector 21a and the anode uncoated portion 22c of the first surface 22a1 of the anode current collector 22a.

Examples of materials used for the spacer 24 include various resin materials such as polyethylene (PE), modified polyethylene (modified PE), polystyrene (PS), polypropylene (PP), modified polypropylene (modified PP), ABS resin, and AS resin.

A sealed space S, which is surrounded by the frame-shaped spacer 24, the cathode 21, and the anode 22 is formed inside the power storage cell 20. The sealed space S accommodates the separator 23 and electrolyte. The peripheral portion of the separator 23 is embedded in the spacer 24.

The electrolyte is a liquid electrolyte. Examples of the liquid electrolyte include a liquid electrolyte containing a nonaqueous solvent and an electrolyte salt dissolved in the nonaqueous solvent. As the electrolyte salts, known lithium salts such as LiClO₄, LiAsF₆, LiPF₆, LiBF₄, LiCF₃SO₃, LiN(FSO₂)₂, and LiN(CF₃SO₂)₂ can be used. As the nonaqueous solvent, known solvents such as cyclic carbonates, cyclic esters, chain carbonates, chain esters, and ethers can be used. These known solvent materials may be used in a combination of two or more thereof. A preferable example of the combination of the solvent materials is a combination of a cyclic ester and a chain ester. Since the solvent in which the cyclic ester and the chain ester are combined has a low viscosity, the fluidity of the liquid electrolyte is improved. An improvement of the fluidity of the liquid electrolyte readily leads to an effect of limiting the increase in electrical resistance.

The spacer 24 seals the sealed space S between the cathode 21 and the anode 22, thereby preventing leakage of the electrolyte accommodated in the sealed space S to the outside. The spacer 24 also prevents water from entering the sealed spaces S from the outside of the power storage device 10. Furthermore, the spacer 24 prevents gas generated in the cathode 21 or the anode 22, for example, due to charge-discharge reactions, from leaking to the outside of the power storage device 10.

The cell stack 30 has a structure in which the power storage cells 20 are stacked such that the second surface 21a2 of the cathode current collector 21a and the second surface 22a2 of the anode current collector 22a are in contact with each other. Thus, the power storage cells 20, which form the cell stack 30, are connected in series.

In the cell stack 30, any two of the power storage cells 20 adjacent to each other in the stacking direction form a quasi-bipolar electrode 25, in which the cathode current collector 21a and the anode current collector 22a in contact with each other are regarded as one current collector. Each of the quasi-bipolar electrodes 25 includes a current collector, which has a structure in which a cathode current collector 21a and an anode current collector 22a are stacked, a cathode active material layer 21b, which is formed on one surface of the current collector, and an anode active material layer 22b, which is formed on the other surface of the current collector.

The power storage device 10 includes two conductive bodies composed of a cathode energization plate 40 and an anode energization plate 50 arranged so as to sandwich the cell stack 30 in the stacking direction of the cell stack 30. The cathode energization plate 40 and the anode energization plate 50 are each formed of a material having good conductivity.

The cathode energization plate 40 is electrically connected to the second surface 21a2 of the cathode current collector 21a of the cathode 21 disposed at the outermost position at one end in the stacking direction. The anode energization plate 50 is electrically connected to the second surface 22a2 of the anode current collector 22a of the anode 22 disposed at the outermost position at the other end in the stacking direction.

The power storage device 10 is charged or discharged through terminals provided in the cathode energization plate 40 and the anode energization plate 50. As the material forming the cathode energization plate 40, for example, the material forming the cathode current collector 21a can be used. The cathode energization plate 40 may be formed of a metal plate thicker than the cathode current collector 21a used in the cell stack 30. As the material forming the anode energization plate 50, for example, the material forming the anode current collector 22a can be used. The anode energization plate 50 may be formed of a metal plate thicker than the anode current collector 22a used in the cell stack 30.

As described above, the cathode 21 forming each power storage cell 20 of the power storage device 10 is the electrode 100 including the grooves 103, and the anode 22 is the electrode 100 not including the grooves 103. Since the areas of the cathode active material layer 21b of the cathode 21 and the anode active material layer 22b of the anode 22 are each greater than or equal to 1 m², the planar size of the power storage device 10 is greater than or equal to 1 m².

The height of the power storage device 10 is, for example, less than or equal to the 20 cm. The lower limit of the height of the power storage device 10 may be set in accordance with the area of the cathode active material layer 21b and the area of the anode active material layer 22b of the anode 22 so that the power storage device 10 has a required capacity. For example, in a case of a lithium-ion rechargeable battery used as the battery for various types of vehicles such as battery electric vehicles, the lower limit of the height of the power storage device 10 is set such that the capacity per unit area of the power storage device 10 as a whole including the power storage cells 20 is, for example, greater than or equal to 20 kWh/m². The capacity per unit area is preferably high. That is, the capacity per unit area is preferably greater than or equal to 25 kWh/m², greater than or equal to 30 kWh/m², greater than or equal to 33 kWh/m², or greater than or equal to 35 kWh/m². The capacity of the power storage device 10 is preferably greater than or equal to 50 kWh. The capacity of the power storage device 10 is, for example, less than or equal to 100 kWh.

### Operation of the present embodiment will now be described.

The present embodiment limits, in a bipolar power storage device, the increase in electrical resistance due to an increase in the area of the active material layer of each electrode. The mechanism of the increase in electrical resistance due to an increase in the area of the active material layer is as follows.

The anode active material contained in the anode active material layer 22b expands and contracts by occluding and releasing lithium ions during charging or discharging. At this time, the liquid electrolyte with which the anode active material layer 22b is impregnated is pushed out and released to the outside of the anode active material layer 22b due to the expansion of the anode active material, and the liquid electrolyte is absorbed by the anode active material layer 22b due to the contraction of the anode active material. As described above, in the anode 22, release and absorption of liquid electrolyte by the anode active material layer 22b are repeated during charging and discharging.

Since lithium is incorporated into the anode active material during charging when the anode active material expands, the liquid electrolyte released by the expansion of the anode active material has a low lithium ion concentration. In other words, liquid electrolyte having a low lithium ion concentration is released from the anode active material layer 22b.

In the vicinity of the main surface of the anode active material layer 22b, liquid electrolyte having a high lithium ion concentration is sufficiently present. Therefore, even when the liquid electrolyte having a low lithium ion concentration released from the anode active material layer 22b is mixed, the lithium ion concentration of the liquid electrolyte remains almost unchanged.

In the vicinity of the outer peripheral edge of the anode active material layer 22b, liquid electrolyte having a low lithium ion concentration released from the anode active material layer 22b is mixed, and thus the lithium ion concentration of the liquid electrolyte decreases. Then, at the time of discharging, when the anode active material contracts, the liquid electrolyte in which the lithium ion concentration has been lowered is absorbed into the anode active material layer 22b. Therefore, by repeating charging and discharging, the lithium ion concentration of the liquid electrolyte in the vicinity of the outer peripheral edge of the anode active material layer 22b gradually decreases. Accordingly, the lithium ion concentration of the outer peripheral portion of the anode active material layer 22b also gradually decreases.

As the area of the anode active material layer 22b increases, the liquid electrolyte present in the outer peripheral edge of the anode active material layer 22b becomes less likely to be replaced with the liquid electrolyte present in the vicinity of the central portion of the anode active material layer 22b, that is, in the vicinity of the main surface close to the center in the planar direction. Therefore, when the area of the anode active material layer 22b is relatively large, the reduction in lithium ion concentration in the liquid electrolyte near the outer peripheral edge of the anode active material layer 22b, as well as the reduction in lithium ion concentration in the outer peripheral portion of the anode active material layer 22b, become more pronounced.

As a result, the lithium ion concentration in the anode active material layer 22b becomes uneven depending on different regions. Specifically, the lithium ion concentration of the outer peripheral portion is relatively low, and the lithium ion concentration of the central portion is relatively high. Such an uneven concentration of lithium ion causes the anode active material layer 22b to have parts with a relatively high electrical resistance and relatively low reactivity and parts with a relatively low electrical resistance and a relatively high reactivity. Consequently, the differences in electrical resistance among the various regions of the anode active material layer 22b lead to an increase in the overall electrical resistance of the electrode.

In particular, when the density of the anode active material layer 22b is relatively high or when the porosity of the anode active material layer 22b is relatively low, the amount of active material per unit area in the anode active material layer 22b increases. Accordingly, a larger amount of lithium is incorporated into the anode active material layer 22b in the reaction during one charging operation. As a result, the uneven concentration of lithium ion in the anode active material layer 22b reaches such a level as to increase the electrical resistance of the electrode in a smaller number of charge-discharge cycles. Therefore, when the density of the anode active material layer 22b is relatively high or when the porosity of the anode active material layer 22b is relatively low, the above-described problem of an increase in the electrical resistance of the electrode occurs in a relatively small number of charge-discharge cycles.

Similarly, when the density of the cathode active material layer 21b is relatively high or when the porosity of the cathode active material layer 21b is relatively low, the reaction on the side of the anode active material layer 22b is likely to proceed. Thus, a larger amount of lithium is incorporated into the anode active material layer 22b in the reaction during one charging operation. Therefore, when the density of the cathode active material layer 21b is relatively high or when the porosity of the cathode active material layer 21b is relatively low, the above-described problem of an increase in the electrical resistance of the electrode occurs in a relatively small number of charge-discharge cycles.

In the present embodiment, the grooves 103 are disposed such that the maximum distance D of each island 104 in relation to the cathode active material layer 21b of the cathode 21 is less than or equal to 60 mm. The islands 104 are parts of the main surface of the cathode active material layer 21b in which the grooves 103 are not present. The maximum distance D is the maximum value of the shorter one of the distance L3 between any point on each island 104 and the outer edge 104a, and the distance L4 between that point and the groove edge 104b.

In this case, the liquid electrolyte flows through the grooves 103 of the cathode active material layer 21b to make the lithium ion concentration uniform. For example, during charging, the liquid electrolyte present in the vicinity of the main surface of the anode active material layer 22b flows into the grooves 103 of the cathode active material layer 21b facing the anode active material layer 22b with the separator 23 interposed therebetween. At this time, the liquid electrolyte flows toward and into the closest groove 103 from the entire area surrounding that groove 103. The liquid electrolyte that has flowed into the grooves 103 flow through the grooves 103 and is released from the ends of the grooves 103 to the vicinity of the outer peripheral edge of the cathode active material layer 21b. During discharging, the liquid electrolyte present in the vicinity of the outer peripheral edge of the anode active material layer 22b flows toward the center of the main surface of the anode active material layer 22b so as to compensate for the liquid electrolyte that has flowed into the grooves 103 during charging. Some of the liquid electrolyte present in the vicinity of the outer peripheral edge of the anode active material layer 22b also flows into the grooves 103 located in the vicinity of the outer peripheral edge.

Due to such a large flow of the liquid electrolyte, the liquid electrolyte having a relatively high lithium ion concentration present in the vicinity of the main surface of the anode active material layer 22b, is supplied to the vicinity of the outer peripheral edge of the anode active material layer 22b through the grooves 103 and the vicinity of the outer peripheral edge of the cathode active material layer 21b. On the other hand, the liquid electrolyte having a relatively low lithium ion concentration present in the vicinity of the outer peripheral edge of the anode active material layer 22b is supplied to the center of the main surface of the anode active material layer 22b.

As a result, the liquid electrolyte having a relatively high lithium ion concentration present in the vicinity of the main surface of the anode active material layer 22b, is replaced with the liquid electrolyte having a relatively low lithium ion concentration present in the vicinity of the outer peripheral edges of the anode active material layer 22b. Then, the liquid electrolyte having a relatively high lithium ion concentration and the liquid electrolyte having a relatively low lithium ion concentration are mixed in many places in the grooves 103 and around the anode active material layer 22b. This limits a local decrease in the lithium ion concentration of the liquid electrolyte in the vicinity of the outer peripheral edge of the anode active material layer 22b. Thus, a local decrease in the lithium ion concentration in the outer peripheral portion of the anode active material layer 22b is limited, and an increase in the electrical resistance of the electrode due to the uneven concentration of lithium ion is limited.

Furthermore, when the grooves 103 are formed in the cathode active material layer 21b, normal electrode reactions occur at the portions of the anode active material layer 22b of the anode 22 that overlap with the islands 104 of the cathode active material layer 21b. In the portions of the anode active material layer 22b of the anode 22 that overlap with the grooves 103 of the cathode active material layer 21b, the electrode reactions are weaker compared to the portions overlapping with the islands 104. Therefore, in the planar direction of the anode active material layer 22b, areas where the electrode reaction is relatively weak are formed in a regular arrangement corresponding to the grooves 103. In other words, by providing the grooves 103 in the cathode active material layer 21b, regions of the anode active material layer 22b with relatively weak electrode reactions are formed indirectly. These parts of relatively weak electrode reaction are finely distributed across the entire surface of the anode active material layer 22b, in alignment with the shape of the grooves 103.

In parts of the anode active material layer 22b in which the electrode reaction is relatively weak, the released amount of liquid electrolyte having a relatively low lithium ion concentration is relatively small. As a result, the regions where the release of liquid electrolyte with a relatively low lithium ion concentration is reduced are finely distributed across the entire surface of the anode active material layer 22b. This also generates small flows that attempt to equalize the finely distributed differences in lithium ion concentration across the liquid electrolyte surrounding the anode active material layer 22b, including the areas near the central portion of the anode active material layer 22b.

These small flows also result in the replacement of the liquid electrolyte near the outer peripheral edge of the anode active material layer 22b with the liquid electrolyte near the central portion of the anode active material layer 22b. As a result, a local decrease in the lithium ion concentration in the outer peripheral portion of the anode active material layer 22b is limited, and an increase in the electrical resistance of the electrode due to the uneven concentration of lithium ion is limited.

The present embodiment has the following advantages.
(1) The electrode 100 for a power storage device is a cathode for the bipolar power storage device 10, in which multiple power storage cells 20 are stacked in series. The electrode 100 includes a current collector 101 and a cathode active material layer 102 formed on a surface of the current collector 101. The area of the cathode active material layer 102 is greater than or equal to 1 m². The cathode active material layer 102 includes a main surface 102a located on the side opposite to the surface facing the current collector 101, and grooves 103 that open in the main surface 102a. In plan view of the main surface 102a, the maximum distance D, which is the maximum value of the specific distance, is less than or equal to 60 mm. The specific distance is the shorter one of the distance between an arbitrary point in each island 104 (a part of the main surface 102a in which the groove 103 is not provided) and an outer peripheral edge of the cathode active material layer 102, and the distance between the arbitrary point and the groove 103.

The above-described configuration limits the increase in electrical resistance due to an increase in the area of the anode active material layer 22b.
(2) The cathode active material layer 102 has a shape with a longitudinal direction and a transverse direction, and each groove 103 has a linear shape extending in the longitudinal direction of the cathode active material layer 102.

The electrode 100, which includes a cathode active material layer 102 with a longitudinal direction and a transverse direction, tends to deform due to its own weight, so that the ends in the longitudinal direction sag. Moreover, when the grooves 103 are formed in the cathode active material layer 102, the cathode active material layer 102 is prone to bending at the portions in which the grooves 103 are formed.

Therefore, in the case in which the grooves 103 extending in the transverse direction of the cathode active material layer 102 are formed, the direction in which the ends in the longitudinal direction are bent so as to sag and the direction in which the ends tend to be bent due to the grooves 103 are the same. This makes it more likely for deformation of the cathode to occur in the direction in which the ends in the longitudinal direction sag. Specifically, during a transportation process of manufacturing electrodes, for instance, when a cathode is transported using suction, the electrode tends to sag due to its own weight, leading to deformation of the cathode. This problem arises even when the grooves 103 extend in a direction intersecting the longitudinal direction, albeit to a lesser degree.

On the other hand, in the case in which the grooves 103 extending in the longitudinal direction of the cathode active material layer 102 are formed, the direction in which the ends in the longitudinal direction are bent so as to sag and the direction in which the ends tend to be bent due to the grooves 103 are orthogonal to each other. As a result, the deformation of the electrode in the direction in which the ends in the longitudinal direction sag is less likely to occur. Additionally, the cathode active material layer 102 with the straight grooves 103 extending in the longitudinal direction can be easily formed by a slit coating technique using a die coater with a shim or a similar obstructions in the slit die.

(3) The grooves 103 each have a linear shape extending in the longitudinal direction of the cathode active material layer 102. The aspect ratio of each island 104 is greater than or equal to 12.

Since the islands 104 each have a shape with a relatively high aspect ratio, that is, an elongated shape, the ratio of the area of the islands 104 to the total area of the cathode active material layer 102 can be increased while shortening the maximum distance D. The capacity of the power storage cell 20 is increased by increasing the ratio of the islands 104 to the total area of the cathode active material layer 102.

(4) The thickness of the cathode active material layer 102 is greater than or equal to 250 µm.

When the cathode active material layer 102 is relatively thick, the grooves 103 can be formed relatively deep. Forming the grooves 103 relatively deep increases the difference in electrode reaction between the portions of the anode active material layer 22b that overlap with the islands 104 of the cathode active material layer 21b and the portions that overlap with the grooves 103. Consequently, the liquid electrolyte surrounding the anode active material layer 22b is likely to flow.

(5) In the power storage device 10, the thickness of the anode active material layer 22b is greater than or equal to 200 µm.

When the anode active material layer 22b is relatively thick, the amount of the active material per unit area in the anode active material layer 22b increases. In this case, since the amount of lithium ions occluded and released per unit area of the anode active material layer 22b also increases, the concentration of lithium ions in the anode active material layer 22b is also likely to be uneven. As a result, the electrical resistance of the electrode is also likely to increase. Therefore, when the anode active material layer 22b is relatively thick, using the configuration described in item (1) above is particularly effective, and the advantage of item (1) is more pronounced.

(6) In the power storage device 10, the porosity of one or both of the cathode active material layer 21b and the anode active material layer 22b is greater than or equal to 30%.

This configuration reduces the rate at which uneven concentration of lithium ion increases in the anode active material layer 22b during charge-discharge cycles. Thus, this configuration, in combination with the configuration described in item (1) above, limits the increase in electrical resistance due to an increase in the area of the anode active material layer 22b in an effective manner.

(7) Of the cathode 21 and anode 22, which form the bipolar electrode 25, only the cathode 21 is configured as the electrode 100 with the grooves 103.

With this configuration, the reduction in the capacity caused by the presence of the grooves 103 is limited compared to a case in which both the cathode 21 and the anode 22 are configured as electrodes 100 with the grooves 103.

The above-described embodiment may be modified as follows. The above-described embodiment and the following modifications can be combined as long as the combined modifications remain technically consistent with each other.

The shape of each groove 103 in plan view is not limited to the one in the above-described embodiment. For example, the linear grooves 103 extending in the longitudinal direction of the cathode active material layer 102 may be replaced with linear grooves 103 extending in the transverse direction or linear grooves 103 extending in a direction intersecting the longitudinal direction and the transverse direction may be used. Alternatively, grooves 103 extending in different directions may be combined to form a pattern of a lattice. Further, instead of the linear groove 103, wave-shaped, concentric, or irregular-shaped grooves may be used.

The widths of the grooves 103 may be the same or different from each other. Further, instead of the grooves 103 having a constant width, grooves 103 having varying widths may be provided.

The cross-sectional shape of each groove 103 is not limited to a rectangular shape. Examples of other cross-sectional shapes of the grooves 103 include a V-shaped cross-section, a U-shaped cross-section, and a trapezoidal cross-section.

The grooves 103 may have a shape that does not reach the current collector 101, that is, a shape with a bottom formed by the cathode active material layer 102. In this case, the depth of the grooves 103 is, for example, greater than or equal to 50% the thickness of the cathode active material layer 102.

In the above-described embodiment, only the cathode 21 of the cathode 21 and the anode 22, which form the quasi-bipolar electrode 25, is the electrode 100 having the grooves 103. However, both the cathode 21 and the anode 22 may be the electrode 100 having the grooves 103. When the grooves 103 are provided in the anode active material layer 22b, lithium may be deposited in the grooves 103 of the anode active material layer 22b if the following condition is met. The condition is that the grooves 103 provided in the anode active material layer 22b each have a shape reaching the current collector 101, and each portion of the cathode active material layer 21b overlapping with a groove 103 of the anode active material layer 22b in the stacking direction is an island 104. Therefore, when the grooves 103 are provided in the anode active material layer 22b, the grooves 103 are each preferably provided in a portion overlapping, in the stacking direction, with a portion of the cathode active material layer 21b in which a groove 103 is provided.

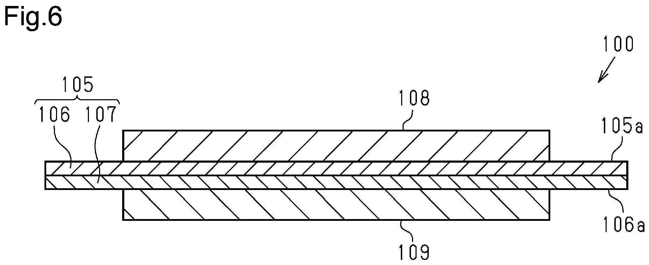

The electrode 100 may be a bipolar electrode in which the cathode 21 and the anode 22 are integrated. An example of the electrode 100 embodied as a bipolar electrode in which the cathode 21 and anode 22 are integrated will be described with reference to Fig. 6.

The bipolar electrode 100 shown in Fig. 6 includes a bipolar current collector 105. The bipolar current collector 105 is a stacked body formed by integrally bonding a foil-shaped cathode current collector 106 and a foil-shaped anode current collector 107 in the thickness direction. Examples of the bipolar current collector 105 include a current collector in which aluminum foils are bonded to each other and a current collector in which an aluminum foil and a copper foil are bonded to each other.

An active material layer 108 configured to be a cathode active material layer is provided on a first surface 105a formed by the cathode current collector 106 in the bipolar current collector 105. Further, an active material layer 109 configured to be an anode active material layer is provided on a second surface 106a formed by the anode current collector 107 in the bipolar current collector 105.

Of the active material layer 108 and the active material layer 109, at least the active material layer 108, which is configured to be a cathode active material layer, is an active material layer that meets the requirements of the active material layer 102 in the above-described embodiment. That is, the bipolar electrode 100 has a structure in which only the cathode active material layer is an active material layer having the grooves 103, or a structure in which both the cathode active material layer and the anode active material layer are active material layers having the grooves 103.

The specific structure of the power storage device 10 in which the electrode 100 is employed is not particularly limited as long as at least one cathode corresponds to the electrode 100. For example, the number of the power storage cells 20 forming the power storage device 10 may be one. Further, the power storage device 10 may include a binding member that applies a binding load to the cell stack 30 in the stacking direction. Alternatively, the power storage device 10 may include the electrode 100 configured to be a bipolar electrode.

### Examples

Specific examples of the above-described embodiment will now be described.

### Preparation of Cathode

Styrene-butadiene rubber and carboxymethyl cellulose as binders, and LiFePO₄ as a cathode active material were mixed, and water was added to the mixture to prepare a cathode composite. The cathode composite was applied in the form of a film having slits to the surface of an aluminum foil as a cathode current collector using a slit die. The applied cathode composite was then subjected to heat treatment for drying and solidification, thereby forming a cathode active material layer with slit-shaped grooves on the cathode current collector. Thus, cathodes for Test Examples 1 to 3 were produced.

The cathode active material layers of the cathodes of Test Examples 1 to 3 each had a rectangular shape in plan view. In the cathodes of Test Examples 1 to 3, the dimensions of the entire cathode active material layer were the same (vertical dimension of 1155 mm × horizontal dimension of 1476.5 mm × thickness of 250 µm), and the shapes of the grooves in plan view were different. The grooves of the cathode of Test Example 1 had a linear shape with a width of 3 mm extending in the horizontal direction in plan view, and the grooves were arranged in the vertical direction at a pitch of 122 mm. The grooves of the cathode of Test Example 2 had a linear shape with a width of 2 mm extending in the horizontal direction in plan view, and the grooves were arranged in the vertical direction at a pitch of 82 mm. The grooves of the cathode of Test Example 3 had a linear shape with a width of 1 mm extending in the horizontal direction in plan view, and the grooves were arranged in the vertical direction at a pitch of 42 mm. The values of the width H of each island, the maximum distance D within each island, and the aspect ratio of each island in the cathode active material layer in Test Examples 1 to 3 are shown in Table 1.

The cathode composite was applied in the form of a film having no slits to the surface of an aluminum foil as a cathode current collector using a doctor blade. The applied cathode composite was then subjected to heat treatment for drying and solidification, thereby forming a cathode active material layer without grooves on the cathode current collector. Thus, a cathode for Test Example 4 was produced. The dimensions of the entire cathode active material layer of Test Example 4 are the same as those of the cathodes of Test Examples 1 to 3.

### Production of Power Storage Device

By combining the cathodes of Test Examples 1 to 4, an anode, and a separator, a bipolar electrode body battery having a structure in which thirty power storage cells were stacked was produced. The electrode body battery was accommodated in a battery case, an electrolyte solution was injected into the battery case, and the battery case was sealed, thereby obtaining a lithium-ion rechargeable battery.

As the anode, an anode was used that included an anode current collector made of copper and an anode active material layer made of graphite as an anode active material, styrene-butadiene rubber as a binder, and carboxymethyl cellulose as a dispersant. No grooves were formed in the anode active material layer. The anode active material layer of the anode had a rectangular shape in plan view. The overall size of the negative electrode active material layer was a vertical dimension of 1155 mm × a horizontal dimension of 1476.5 mm × a thickness of 250 µm. As the separator, a separator made of polyethylene was used. As the electrolyte solution, an electrolyte solution was used in which lithium hexafluorophosphate was dissolved in a mixed solution in which ethylene carbonate and methyl propionate were mixed at a volume ratio of 15:85 so as to have a concentration of 1.2 M.

### Evaluation of Resistance of Power Storage Device

For each of the obtained lithium-ion rechargeable batteries, the following procedure was repeated for fifteen cycles: a constant current charge at 1.3 C for 30 minutes, followed by a constant current discharge at 0.2 C for 195 minutes, with one full charge-discharge cycle considered as one cycle. In the repetition of the cycles, the discharge resistance at a state of charge (SOC) of 50% was measured after 0 cycles (before the first cycle), after five cycles, after ten cycles, and after fifteen cycles. The rate of change in discharge resistance (hereafter referred to as the "resistance change rate") after five, ten, and fifteen cycles was calculated relative to the discharge resistance after 0 cycles. The results are shown in Table 1.

The discharge resistance was measured as follows. After adjusting the SOC of the lithium-ion rechargeable battery to 50%, a constant current discharge at 1 C for 10 seconds was performed. The discharge resistance was defined as the value obtained by dividing the change in voltage from the voltage (V_{ocv}) before discharge to the attained voltage (V_{ccv}) at the time of 10-second discharge by the current value is defined.

### Evaluation of Uneven Salt Concentration in Active Material Layer

For the lithium-ion rechargeable batteries using the cathodes of Test Examples 1 to 3, the salt concentration in each portion of the anode active material layer was measured. Specifically, the anode was taken out from the lithium-ion rechargeable battery after fifteen cycles, and the salt concentration (lithium hexafluorophosphate concentration) was measured at three specific points on the main surface of the anode active material layer. Then, the maximum salt concentration difference, which is the maximum value of the salt concentration differences at three specific points, was calculated. The results are shown in Table 1.

As shown in Fig. 4, the three specific points were located on the main surface of the anode active material layer and on the back sides of three points (an outer peripheral end point P1, a groove end point P2, and a center point P3) on the main surface of the cathode active material layer. In other words, the three specific points overlapped with the points P1, P2, P3 in the stacking direction. The outer peripheral end point P1 was a point located on the outer peripheral edge of the cathode active material layer in the vertical direction in plan view. The groove side end point P2 was a point at which the distance L3 from the outer peripheral edge in the vertical direction of the cathode active material layer was 738.25 mm in plan view, and was a point at the edge of the island of the cathode active material layer. The center point P3 was a point at which the distance L3 from the outer peripheral edge of the cathode active material layer in the vertical direction was 738.25 mm in plan view, and was a point on the straight line S1 (specific line) in the island of the cathode active material layer. The straight line S1 extended in the horizontal direction and divided the island 104 into two equal parts.

**Table 1**

| | | Test Example 1 | Test Example 2 | Test Example 3 | Test Example 4 |
|---|---|---|---|---|---|
| Cathode Active Material Layer | Area (m²) | 1.7 | 1.7 | 1.1 | 1.7 |
| | Electrode Width H(mm) | 120 | 80 | 40 | 1155 |
| | Maximum Distance D (mm) | 60 | 40 | 20 | 577.5 |
| | Aspect Ratio | 12.3 | 18.5 | 36.9 | 1.28 |
| Resistance Change Rate (%) | 5 Cycles | 101.2 | 100.5 | 99.3 | 120 |
| | 10 Cycles | 104.2 | 102.2 | 99.6 | 180 |
| | 15 Cycles | 108.2 | 104.5 | 100.5 | 220 |
| Salt Concentration (M) | Outer Peripheral End Point P1 | 0.47 | 0.70 | 1.06 | - |
| | Groove End Point P2 | 0.39 | 0.61 | 1.21 | - |
| | Center Point P3 | 1.76 | 1.15 | 1.73 | - |
| | Maximum Salt Concentration | 1.37 | 1.14 | 0.61 | - |

As shown in Table 1, in Test Example 4, the resistance change rate significantly increased with an increase in the number of cycles. This result shows that the electrical resistance was increased by repeating charging and discharging of the lithium-ion rechargeable battery. In addition, although detailed data is omitted, when a similar test was performed using an electrode having the same configuration as that of Test Example 4 except that the area of the anode active material layer was reduced, an increase in resistance due to repetition of charging and discharging was not observed. In this test, an anode was used in which the overall size of the anode active material layer was a vertical dimension of 250 mm × a horizontal dimension of 350 mm × a thickness of 250 mm. These results show that the increase in resistance associated with repetition of charging and discharging is a phenomenon unique to a case in which the area of the anode active material layer is relatively large, for example, greater than or equal to 1 m².

In Test Examples 1 to 3, in which grooves were provided in the cathode active material layer, the resistance change rate after each cycle was lower than that in Test Example 4, in which grooves were not provided in the cathode active material layer, and the increase in resistance due to repetition of charging and discharging was limited. In particular, in Test Example 3, in which the maximum distance D of the cathode active material layers was less than or equal to 30, the resistance change rate after each cycle was maintained at substantially 100%, and the increase in resistance due to repetition of charging and discharging was significantly limited. These results show that an increase in resistance due to repetition of charging and discharging is limited by providing grooves so as to shorten the maximum distance D in the cathode active material layer.

Further, the measurement results of the salt concentration show that the anode active material layer after fifteen cycles had an uneven salt concentration in different regions. Specifically, the salt concentration was high near the center and low near the outer peripheral portion in plan view. Additionally, the more prominent the unevenness of salt concentration, specifically the greater the maximum difference in salt concentration, the higher the resistance change rate became. It is also known that uneven salt concentration within an anode active material layer creates parts of higher electrical resistance and parts of lower electrical resistance in the anode active material layer, and that the greater the difference in resistance between these parts in the anode active material layer, the greater the electrical resistance of the rechargeable battery becomes.

From these points, the following insight is obtained regarding an increase in resistance associated with repeated charge-discharge cycles in a case in which an anode active material layer has a relatively large area.

As charging and discharging are repeated, a salt concentration difference arises between the center and the peripheral portion of the anode active material layer in planar view. When the area of the anode active material layer is relatively large, the distance between the center and the peripheral portion increases, making the unevenness of salt concentration more prominent as a result of repeated charging and discharging. When the resistance differences caused by the uneven salt concentration in the anode active material layer become significant enough to affect the electrical resistance of the rechargeable battery, an increase in resistance due to repetition of charging and discharging occurs. However, as demonstrated in Test Examples 1 to 3, by providing grooves in the cathode active material layer so as to reduce the maximum distance D, it is possible to mitigate the unevenness of salt concentration in the anode active material layer and limit the increase in resistance caused by repetition of charging and discharging.

### REFERENCE SIGNS LIST

100) Electrode
101) Current Collector
102) Active Material Layer
102a) Main Surface
103) Groove
104) Island
10) Power Storage Device (Lithium-Ion Rechargeable Battery)
21) Cathode
22) Anode

## Claims

1. An electrode for a bipolar lithium-ion rechargeable battery, the electrode being **characterized by**:
a current collector; and
a cathode active material layer formed on a surface of the current collector,
wherein
an area of the cathode active material layer is greater than or equal to 1 m²,
the cathode active material layer includes:
a main surface located on a side opposite to a surface facing the current collector; and
a groove that opens in the main surface,
a part of the main surface in which the groove is not provided is referred to as an island,
in plan view of the main surface, a shorter one of a distance between an arbitrary point in the island and an outer peripheral edge of the cathode active material layer, and a distance between the arbitrary point and the groove is defined as a specific distance, and
a maximum value of the specific distance is less than or equal to 60 mm.

2. The electrode for the lithium-ion rechargeable battery according to claim 1, wherein
the cathode active material layer has a shape with a longitudinal direction and a transverse direction, and
the groove has a linear shape extending in the longitudinal direction of the cathode active material layer.

3. The electrode for the lithium-ion rechargeable battery according to claim 1, wherein
the cathode active material layer has a rectangular shape with a longitudinal direction and a transverse direction,
the groove has a linear shape extending in the longitudinal direction of the cathode active material layer, and
an aspect ratio of the island is greater than or equal to 12.

4. The electrode for the lithium-ion rechargeable battery according to claim 1, wherein the cathode active material layer has a thickness greater than or equal to 250 µm.

5. A bipolar lithium-ion rechargeable battery, comprising the electrode according to any one of claims 1 to 4.

6. The lithium-ion rechargeable battery according to claim 5, which has a capacity greater than or equal to 50 kWh.
